Europäisches Patentamt

European Patent Office

Office européen des brevets

(19)

(11) Publication number: **0 209 864**

**B1**

(12) EUROPEAN PATENT SPECIFICATION

(45) Date of publication of patent specification: **16.05.90**

(51) Int. Cl.⁵: **C 08 F 2/10, C 08 F 2/48**

(21) Application number: **86109886.1**

(22) Date of filing: **18.07.86**

(54) **Process for producing water-soluble or water-swellable polymer.**

(30) Priority: **19.07.85 JP 158270/85**

(43) Date of publication of application:
**28.01.87 Bulletin 87/05**

(45) Publication of the grant of the patent:
**16.05.90 Bulletin 90/20**

(84) Designated Contracting States:
**DE FR GB NL SE**

(56) References cited:
**DE-A-1 915 903**
**FR-A-2 558 166**

(73) Proprietor: **MITSUBISHI RAYON CO., LTD.**
3-19, Kyobashi 2-chome Chuo-Ku
Tokyo 104 (JP)

(73) Proprietor: **NITTO CHEMICAL INDUSTRY CO.,
LTD.**
No. 5-1, Marunouchi 1-chome Chiyoda-ku
Tokyo (JP)

(73) Proprietor: **Diafloc Co.,Ltd.**
5-1,Marunouchi 1-chome
Chiyoda-ku Tokyo (JP)

(72) Inventor: **Sugimori, Teruhiko c/o Mitsubishi
Rayon Co., Ltd.**
20-1, Miyukicho, Ohtake-shi
Hiroshima-ken (JP)
Inventor: **Habara, Hideaki c/o Mitsubishi Rayon
Co., Ltd.**
20-1, Miyukicho, Ohtake-shi
Hiroshima-ken (JP)
Inventor: **Inukai, Ken-ichi c/o Mitsubishi Rayon
Co., Ltd.**
20-1, Miyukicho, Ohtake-shi
Hiroshima-ken (JP)
Inventor: **Furuno, Akihisa c/o Nitto Chemical
Ind. Co., Ltd.**
10-1, Daikokucho, Tsurumi-ku, Yokohama-shi
Kanagawa-ken (JP)

Courier Press, Leamington Spa, England.

# EP 0 209 864 B1

(74) Representative: **Lehn, Werner, Dipl.-Ing. et al
Hoffmann, Eitle & Partner Patentanwälte
Arabellastrasse 4
D-8000 München 81 (DE)**

## Description

Background of the Invention

This invention relates to a process for producing a polymer which is produced by polymerizing a monomer solution layer covered with a non-polymerizable sheet, more particularly to a process for producing a water-soluble or water-swellable polymer which comprises carrying out the polymerization reaction while performing temperature control with a gas.

For production of water-soluble or water-swellable polymers, it has been generally practiced to employ the method in which polymerization reaction is carried out in a polymerization reactor. In this case, when a polymerization reactor of larger volume is used in order to increase the processing amount in one reaction for improvement of productivity, it becomes difficult to stir the system in the region with higher monomer concentration, whereby polymerization cannot be controlled.

On the other hand, if the monomer concentration is lowered in order to avoid such a trouble, there is involved a problem such that it takes a long time and an enormous amount of energy for drying.

As a countermeasure against such a problem, it has been proposed to carry out the polymerization reaction by making a monomer solution containing a polymerization initiator into the shape of a sheet (Japanese Provisional Patent Publication No. 27382/1980, Japanese Patent Publications No. 12445/1980 and No. 15808/1980).

In this method of the prior art, in order to maintain a suitable temperature in the reaction by preventing temperature elevation due to generation of heat during polymerization reaction, temperature control has been conducted with water.

However, when water is used as the cooling medium in polymerization under the state of a sheet, there ensue several problems. For example, the cooling water will penetrate through the gap of the non-polymerizable sheet covering over the liquid surface of the monomer solution. This interferes with the polymerization reaction, whereby the polymer formed is also lowered in quality. Further, there is the possibility of leaking of the monomer solution. If the monomer solution leaks out, there is also the problem that pollution may be caused by the wastewater in which the monomer or the polymer is mixed.

The present inventors have studied intensively in order to overcome the problems as described above, and consequently found that the problems when using water can be solved by use of a gas as the medium for temperature control in polymerizing the monomer solution layer covered with a non-polymerizable sheet and also that the polymer obtained has good quality, to accomplish the present invention.

Summary of the Invention

The present invention concerns a process for producing a water-soluble or water-swellable polymer, which comprises photopolymerizing a monomer solution layer with a thickness of 1 to 50 mm containing a polymerization initiator covered with a non-polymerizable light transmissive film closely contacted on the monomer layer by using a gas as the cooling medium for temperature control.

The gas to be used in the present invention is not particularly limited, but it is generally preferred to be air, nitrogen gas or carbon dioxide because of workability or cost. These can be used either singly or in a mixed system of two or more kinds, either at normal temperature, or under cooling or heating in order to maintain a suitable temperature for the photopolymerization reaction.

While the present invention is intended to photopolymerize the above monomer solution layer with the use of a gas as the cooling medium, it is also possible to use gas such as heated air, nitrogen, a vapor, for the purpose of heating or maintaining the temperature of the monomer solution at an optimum temperature for polymerization in the initial stage of polymerization.

The monomer in the aqueous monomer solution to be used in the present invention may be those which can form water-soluble or water-swellable polymers, including, for example, neutral monomers such as acrylamide, methacrylamide and hydroxyethylmethacrylate; positively charged monomers such as dimethylaminoethyl acrylate, dimethylaminoethyl methacrylate, 3-dimethylamino-2-hydroxypropyl acrylate, 3-dimethylamino-2-hydroxypropyl methacrylate, dimethylaminopropylacrylamide, dimethyl-aminopropylmethacrylamide and salt of these, or quaternary ammonium salts obtained by converting these tertiary amines with methyl chloride, methyl bromide, methyl iodide and dimethyl sulfate, dimethyl-diallylammonium salt and diethyldiallylammonium salt; negatively charged monomers such as acrylic acid, methacrylic acid, acrylamidomethylpropane sulfonic acid, itaconic acid and salts of these. These can be used either individually or in a mixed system of two or more kinds. Further, within the range which does neither impair uniformity of the monomer solution nor impair water-solubility or water-swellability of the polymer obtained, it is possible to use in combination a water-insoluble or difficultly water-soluble monomer such as acrylonitrile, styrene, methyl acrylate, methyl methacrylate, butyl acrylate or butyl methacrylate. An amount of the water-insoluble or difficultly water-soluble monomer is preferably 10% by weight or less based on the total monomer.

Also, a cross-linkable monomer containing two or more unsaturated double bonds in one molecule can be added. Examples of cross-linkable monomer may include methylenebisacrylamide, ethyleneglycol diacrylate, ethyleneglycol dimethacrylate, tetraethyleneglycol diacrylate, tetraethyleneglycol dimethacrylate, polyethyleneglycol diacrylate, polyethyleneglycol dimethacrylate, trimethylolpropane triacrylate and trimethylolpropane trimethacrylate.

3

The monomer solution is obtained by dissolving the above monomer or water-insoluble monomer in a solvent such as water optionally with heating and/or stirring. Its concentration is not particularly limited within the range which can maintain uniformity during polymerization reaction, but it is generally 20% or higher. If it is less than 20%, it will take a long time for the reaction and drying, whereby the production cost is also increased. The pH of the monomer solution can optionally be adjusted to suitable pH for the polymerization reaction.

The thickness of the monomer solution layer should be 1 to 50 mm in order to make the temperature distribution within the solution layer during polymerization reaction uniform and perform sufficient temperature control, and it is preferably 3 to 50 mm. With a thickness less than 1 mm, the productivity will be lower. With a thickness in excess of 50 mm, the temperature control during polymerization reaction cannot be done.

The monomer solution is covered with the non-polymerizable light transmissive film closely contacted on the monomer layer as hereinafter described.

The non-polymerizable film to be used in the present invention may include glass plates, polymer sheets or films such as polyesters, fabrics comprising glass fibers impregnated with polymer and composite sheets comprising glass plate applied with coating.

The polymerization initiator to be used in the present invention is not particularly limited, but various polymerization initiators generally employed may be avilable. For example, there may be employed azo initiators such as 2,2'-azobis(2-amidinopropane)dihydrochloride and 4,4'-azobis(4-cyanovaleric acid); peroxide initiators such as benzoyl peroxide and laurolyl peroxide; redox polymerization initiators such as hydrogen peroxide-$Fe^{2+}$ and cumene hydroperoxide-$Fe^{2+}$, photopolymerization initiators such as benzoin, benzoin alkyl ethers and anthraquinone derivatives.

When the photopolymerization initiator is employed, it is required to irradiate a light from the outside, and it has an advantage that a polymerization speed during photopolymerization reaction can easily be controlled by varying an irradiation intensity. Among the photopolymerization method, as a method in which irradiation of light is carried out under absence of oxygen, there may be mentioned, for example, the $N_2$ box method in which the reaction system is covered with a glass plate, the internal atmosphere is filled with a nitrogen gas, and a light is irradiated through the glass plate; and the film method in which light is irradiated with a light-transmissive film closely contacted on the monomer layer.

In this case, the light to be used may have various wavelengths depending on the combination of the photoinitiator, but they are preferably within the range of from 300 to 500 nm in respect of absorption of the monomer itself, quantum energy of the light and light source. As the light source for the light within such wavelengths, there may be employed high pressure mercury lamp, ultra-high pressure mercury lamp and fluorescent chemical lamp.

Further, in the photopolymerization method, the irradiation intensity can optionally be determined depending on the kinds of concentrations of monomers to be used, kinds or concentrations of polymerization initiators to be used, properties of polymers to be desired and thickness of the monomer solution layer to be employed.

In the present invention, the reaction time is not particularly limited, but from the viewpoint of an industrial application, it is preferably 12 hours or shorter, more preferably 8 hours or shorter.

The temperature control is performed with a gas in order to prevent temperature elevation of the polymerization reaction system and maintain a temperature suitable for the reaction. This temperature control method is not particularly limited, but it is possible to use any method which can perform temperature control efficiently without residence of the gas. Particularly, the blowing method or the aspirating method is generally preferred. In this case, the flow rate of the gas can be controlled suitably depending on the temperature to be controlled. The temperature control with a gas can be performed either on one surface or on both surfaces of the monomer solution layer.

The producing method of the present invention may be a method in which polymerization is carried out by flowing and spreading monomers in a vat or a continuous polymerization method.

When the producing method of the present invention is employed the continuous system, it can be carried out, for example, on a moving system endless horizontal belt, a monomer solution layer is fed continuously and the surface thereof is covered with a non-polymerizable sheet, or between two sheets of endless belts in parallel to each other, a monomer solution layer is fed continuously and polymerization reaction is carried out according to an appropriate polymerization method while moving the monomer solution layer. The polymerization can be carried out while controlling flow of a gas such as nitrogen gas at an appropriate flow rate and temperature on one surface or on both surfaces of the monomer solution layer according to the blowing method or the aspirating method, by such a process, a water-soluble or water-swellable polymer of good quality can be obtained.

The water-soluble polymer obtained according to the production process of the present invention is useful as flocculant in industrial and municipal waste-water processing, strength aids or retention aids in paper industry, soil conditioner, thickener and reagent for enhanced oil recovery and the water-swellable polymer obtained is useful as water-absorber for hygienic goods and paper diapers and water-holding agent for agriculture and horticulture.

The production process of the present invention uses a gas as the medium for cooling and therefore temperature control of the polymerization reactor system can be easily done. The cooling effect is substantially equal to the case of water cooling as can be apparently seen from the Examples and the Table shown below. Also, various problems caused in the case of using water as the medium for cooling can be solved, and further the product formed is equal to or better than the prior art product in quality. Thus, its industrial value is very great.

The present invention is described in more detail by referring to the following Examples and Comparative examples. The viscosity (1% $\eta s$) was measured by crushing coarsely the polymer obtained, then dried at 60°C for 8 hours, further crushing finely, then dissolving 5 g of the powder of the polymer in 500 g of an aqueous N/5 sodium chloride solution under stirring and measuring the viscosity by a Brookfield type viscometer.

The thermal conductivity ($L_A$) of the polymer, the overall heat transmission coefficient of the upper surface of the monomer solution ($U_1$) and the overall heat transmission coefficient of the lower surface of the monomer solution ($U_2$) were determined according to the finite element method by measurement of the cooling curve after completion of the polymerization reaction. The units are kcal/m·hr·°C for a thermal conductivity and kcal/m²·hr·°C for overall heat transmission coefficient.

The temperature of the monomer solution layer was measured by inserting a temperature sensor into a Teflon (trade name) coated vat at the positions of 0 mm, 5 mm, 10 mm, 15 mm from the lower surface of the monomer solution layer in Examples 1, 2, 5 and 6 and Comparative example 1, and at the positions of 0 mm, 4 mm, 8 mm and 11 mm from the lower surface of the monomer solution layer in Example 3 and Comparative example 4.

## Example 1

After 586.4 g of methacryloyloxyethyltrimethylammonium chloride, 146.6 g of acrylamide and 0.08 g of benzoin methyl ether were dissolved by heating in 147 g of deionized water, the solution was adjusted to pH 4.0 with 6 N sulfuric acid to prepare a monomer solution. After the oxygen in the monomer solution was replaced with nitrogen under the conditions of 30°C and 1 hour, the solution was cast into a stainless steel vat applied with Teflon (trade name) coating and the upper surface of the monomer solution layer was covered with a polyethylene terephthalate film with a thickness of 50 μm so that it may closely contact the monomer solution. Then, while controlling the temperature according to the blowing method by use of an air of 30°C at the rate of 0.1 liter/cm²/min through a fine apperture nozzle from the bottom of the stainless steel vat, polymerization reaction was carried out by irradiating light with wavelength of 300 to 400 nm at an intensity of 2.5 W/m² by a fluorescent chemical lamp from the upper surface of the monomer solution layer to obtain a water-soluble polymer.

During the polymerization, the monomer solution layer became elevated in temperature with the progress of the reaction until the temperature at the position of 15 mm reached the maximum temperature of 105°C, 18 minutes after initiation of photopolymerization, and thereafter it became lowered.

The irradiation intensity of light was maintained at 2.5 W/m² until 15 minutes after reaching the maximum temperature, and thereafter irradiation was effected at 50 W/m² for 5 minutes.

The polymer formed was found to have a viscosity of 0.39 PaS (390 cps), with $L_A$, $U_1$ and $U_2$ being 0.36, 9 and 65, respectively.

The temperature change of the polymerization reaction system with time is shown in Table 1.

## Example 2

The reaction was carried out in the same manner as Example 1, except for performing cooling according to the blowing method by use of an air of 30°C at the rate of 0.1 liter/cm²/min at the bottom of the vat and 0.01 liter/cm²/min on the upper surface.

The maximum temperature was 94°C after 18 minutes at the position of 15 mm. The polymer formed was found to have a viscosity of 0.13 PaS (130 cps).

The temperature change with time is shown in Table 1.

## Comparative example 1

The reaction was carried out in the same manner as Example 1, except for using water of 30°C at a flow rate of 0.01 liter/cm²/min at the medium for cooling.

The maximum temperature was 95°C after 18 minutes at the position of 15 mm. The polymer formed was found to have a viscosity of 0.43 PaS (430 cps), with $U_2$ being 81.

A part of the water used was found to be penetrated between the vat and the film, and a part of the polymer formed was under the state swelled with water.

The temperature change with time is shown in Table 1.

## Comparative example 2

The same reaction as an Example 1 was carried out without performing temperature control. The monomer solution layer exhibited abrupt temperature elevation with the progress of the reaction until the temperature exceeded 125°C at the position of 15 mm, 15 minutes after initiation of photopolymerization, whereby the reaction could proceed with difficulty because the polymer became foamed and expanded greatly by boiling of the water in the monomer solution.

Comparative example 3

The same reaction as in Comparative example 2 was carried out except that the intensity of photopolymerization was made 1 W/m².

Although the polymerization heat generation speed was lowered by weakening the irradiation intensity, also in this case the monomer solution layer became partially increased to 125°C or higher after 25 minutes after initiation of photopolymerization, whereby it became difficult to carry out the reaction smoothly because the polymer was foamed and expanded greatly due to boiling of the water.

Example 3

After 960 g of methacryloyloxyethyltrimethylammonium chloride and 0.12 g of benzoyl methyl ether were dissolved by heating in 240 g of deionized water, the solution was adjusted to pH 3.5 with 4 N hydrochloric acid to prepare a monomer solution. The oxygen in the monomer solution was replaced with nitrogen under the conditions of 30°C and 1 hour, the solution was cast into a stainless steel vat of 800 cm² × 10 cm having a Teflon (trade name) coating and a Pyrex (trade name) glass plate with a thickness of 5 mm was covered over the monomer solution layer. At this time, nitrogen atmosphere was filled in between the monomer solution and the glass plate.

Then, while carrying out temperature control according to the blowing method by use of an air of 30°C at the rate of 0.1 liter/cm²/min through a fine aperture nozzle from the bottom of the stainless steel vat, polymerization reaction was conducted by irradiating light with wavelength of 300—400 nm at an intensity of 1 W/m² by a fluorescent chemical lamp from above the monomer solution layer through the glass plate to obtain a water-soluble polymer.

During the reaction, the monomer solution layer became elevated in temperature with progress of the reaction, until the temperature at the position of 11 mm reached the maximum temperature of 74°C, 24 minutes after initiation of photopolymerization, and thereafter lowered.

The intensity of photopolymerization was maintained at 1 W/m² for ten minutes after reaching the maximum temperature, and thereafter irradiation was effected at 40 W/m² for 10 minutes.

The polymer formed was found to have a viscosity of 0.98 PaS (980 cps) with $L_A$, $U_1$ and $U_2$ being 0.39, 11 and 67, respectively.

The temperature change with time is shown in Table 1.

Comparative example 4

The same reaction as in Example 3 was carried out except for using water of 30°C at the flow rate of 0.01 liter/cm²/min at the medium for cooling.

The maximum temperature at the position of 11 mm was 72°C at 24 minutes later. The polymer formed was found to have a viscosity of 1.01 PaS (1010 cps) with $U_2$ being 82.

The temperature change with time is shown in Table 1.

## Table 1

| Measuring position (mm) \\ Time (min.) | Example 1 | | | Example 2 | | | Comparative example 1 | | | Example 3 | | | Comparative example 4 | | |
|---|---|---|---|---|---|---|---|---|---|---|---|---|---|---|---|
| | 6 | 12 | 18 | 6 | 12 | 18 | 6 | 12 | 18 | 8 | 16 | 24 | 8 | 16 | 24 |
| | Temperature (°C) | | | Temperature (°C) | | | Temperature (°C) | | | Temperature (°C) | | | Temperature (°C) | | |
| 0 | 34 | 39 | 43 | 34 | 38 | 41 | 34 | 42 | 44 | 32 | 34 | 36 | 32 | 34 | 35 |
| 5 or 4 | 43 | 57 | 62 | 43 | 53 | 57 | 44 | 55 | 61 | 36 | 44 | 48 | 35 | 44 | 48 |
| 10 or 8 | 54 | 75 | 83 | 54 | 72 | 81 | 56 | 74 | 83 | 42 | 54 | 61 | 41 | 53 | 60 |
| 15 or 11 | 70 | 90 | 105 | 68 | 86 | 94 | 64 | 86 | 95 | 51 | 67 | 74 | 50 | 66 | 72 |

EP 0 209 864 B1

## Example 5

After mixing 490 g of an aqueous 50% acrylamide solution, 6.25 g of an aqueous 80% acrylic acid solution and 503.75 g of deionized water and then dissolving 0.05 g of benzoin ethyl ether and 0.4 g of nitrilotrispropionic acid therein, the solution was adjusted to pH 10 with an aqueous 40% sodium hydroxide solution to prepare a monomer solution. After the oxygen in the monomer solution was replaced with nitrogen under the conditions of 30°C and 1 hour, the solution was cast into a stainless steel vat having an area of 500 cm² and a height of 10 cm applied with Teflon (trade name) coating and the upper surface of the monomer solution layer was covered with a Pyrex (trade name) glass plate having a thickness of 5 mm. At this time, nitrogen atmosphere was filled in between the monomer solution and the glass plate.

Then, while carrying out temperature control according to the blowing method by use of an air of 30°C at the rate of 0.1 liter/cm²/min through a fine aperture nozzle from the bottom of the stainless steel vat, polymerization reaction was conducted by irradiating a near-ultraviolet ray with wavelength of 300—400 nm at an intensity of 0.8 W/m² for first 55 minutes and 20 W/m² for 5 minutes thereafter by a fluorescent chemical lamp from above the monomer solution layer through the glass plate to obtain a water-soluble polymer.

During the reaction, the monomer solution layer became elevated in temperature with progress of the reaction, until the temperature at the position of 15 mm reached the maximum temperature of 60°C, 36 minutes after initiation of photopolymerization, and thereafter lowered.

The polymer formed was found to have a viscosity of 2.4 PaS (2400 cps) with $L_A$, $U_1$ and $U_2$ being 0.33, 9 and 62, respectively.

The temperature change with time is shown in Table 2.

## Example 6

After mixing 240 g of an aqueous 80% acrylic acid solution, 25 g of methylenebisacrylamide and 0.1 g of benzoin methyl ether and then adding 250 g of an aqueous 40% sodium hydroxide solution under cooling, the solution was adjusted to pH 10 with an aqueous 40% sodium hydroxide solution to prepare a monomer solution. After the oxygen in the monomer solution was replaced with nitrogen under the conditions of 30°C and 1 hour, the solution was cast into a stainless steel vat having an area of 500 cm² and a height of 10 cm applied with Teflon (trade name) coating and the upper surface of the monomer solution layer was covered with a Pyrex (trade name) glass plate having a thickness of 5 mm. At this time, nitrogen atmosphere was filled in between the monomer solution and the glass plate.

Then, while carrying out temperature control according to the blowing method by use of an air of 30°C at the rate of 0.1 liter/cm²/min through a fine aperture nozzle from the bottom of the stainless steel vat, polymerization reaction was conducted by irradiating a near-ultraviolet ray with wavelength of 300—400 nm at an intensity of 1.5 W/m² for first 25 minutes and 20 W/m² for 5 minutes thereafter by a fluorescent chemical lamp from above the monomer solution layer through the glass plate to obtain a water-swellable polymer.

During the reaction, the monomer solution layer became elevated in temperature with progress of the reaction, until the temperature at the position of 15 mm reached the maximum temperature of 70°C, 18 minutes after initiation of photopolymerization, and thereafter lowered.

The polymer formed was found to be capable of absorbing 800 g of deionized water per g of dried polymer and thus it shows excellent characteristics as water-absorbable polymer. $L_A$, $U_1$ and $U_2$ of this polymer in the reaction being 0.35, 8 and 64, respectively.

The temperature change with time is shown in Table 2.

### Table 2

| | Example 5 | | | Example 6 | | |
|---|---|---|---|---|---|---|
| Time (min.) <br> Measuring position (mm) | 12 | 24 | 36 | 6 | 12 | 18 |
| | Temperature (°C) | | | Temperature (°C) | | |
| 0 | 31 | 34 | 40 | 32 | 37 | 45 |
| 5 | 32 | 37 | 47 | 34 | 44 | 51 |
| 10 | 35 | 44 | 57 | 36 | 47 | 68 |
| 15 | 36 | 46 | 60 | 37 | 50 | 70 |

**Claims**

1. A process for producing a water-soluble or water-swellable polymer, which comprises photopolymerizing a monomer solution layer with a thickness of 1 to 50 mm containing a polymerization initiator covered with a non-polymerizable light-transmissive film closely contacted on the monomer layer by using a gas as the cooling medium for temperature control.

2. A process for producing a water-soluble or water-swellable polymer according to Claim 1, wherein the photopolymerization is carried out by irradiating a light having a wavelength of 300 to 500 nm.

3. A process for producing a water-soluble or water-swellable polymer according to Claim 1, wherein the polymerization initiator is a photopolymerization initiator.

4. A process for producing a water-soluble or water-swellable polymer according to Claim 1, wherein the gas is selected from the group consisting of an air, a nitrogen gas and a carbon dioxide gas.

5. A process for producing a water-soluble or water-swellable polymer according to Claim 1, wherein concentration of a monomer solution of the monomer solution layer is 20% or higher.

6. A process for producing a water-soluble or water-swellable polymer according to Claim 1, wherein the polymerization is carried out, on a moving system endless horizontal belt, by feeding the monomer solution with a predetermined thickness, covering upper portion of the monomer solution with a non-polymerizable light-transmissive film closely contacted on the monomer layer, polymerizing the monomer while moving the belt and flowing a gas with a predetermined flow rate and temperature on one surface or on both surfaces of the monomer solution through a non-polymerizable light-transmissive film and/or belt according to the blowing method or the aspirating method.

**Patentansprüche**

1. Verfahren zur Herstellung eines wasserlöslichen oder wasserquellbaren Polymers, das die Fotopolymerisation einer einen Polymerisationsstarter enthaltenden Monomerlösungsschicht mit einer Dicke von 1 bis 50 mm, die mit einem nicht-polymerisierbaren, lichtdurchlässigen Film, der dicht mit der Monomerschicht zusammenhängt, überzogen ist, unter Verwendung eines Gases als Kühlmedium zur Temperaturkontrolle umfasst.

2. Verfahren zur Herstellung eines wasserlöslichen oder wasserquellbaren Polymers nach Anspruch 1, wobei die Fotopolymerisation durchgeführt wird, indem man ein Licht mit einer Wellenlänge von 300 bis 500 nm einstrahlt.

3. Verfahren zur Herstellung eines wasserlöslichen oder wasserquellbaren Polymers nach Anspruch 1, wobei der Polymerisationsstarter ein Fotopolymerisationsstarter ist.

4. Verfahren zur Herstellung eines wasserlöslichen oder wasserquellbaren Polymers nach Anspruch 1, wobei das Gas aus der Reihe Luft, Stickstoffgas und Kohlenstoffdioxidgas ausgewählt wird.

5. Verfahren zur Herstellung eines wasserlöslichen oder wasserquellbaren Polymers nach Anspruch 1, wobei die Konzentration der Monomerlösung in der Monomerlösungsschicht 20% oder höher ist.

6. Verfahren zur Herstellung eines wasserlöslichen oder wasserquellbaren Polymers nach Anspruch 1, wobei man die Polymerisation in einem sich bewegenden, endlosen Horizontalbandsystem ausführt, indem man die Monomerlösung mit einer vorbestimmten Dicke zuführt, den oberen Teil der Monomerlösung mit einem nicht-polymerisierbaren, lichtdurchlässigen Film, der eng mit der Monomerschicht verbunden ist, überzieht, das Monomer polymerisiert, während man das Band bewegt und ein Gas mit einer vorbestimmten Fliessrate und Temperatur auf einer Oberfläche oder auf beiden Oberflächen der Monomerlösung durch einem nicht-polymerisierbaren, lichtdurchlässigen Film und/oder Band gemäss dem Blasverfahren oder dem Saugverfahren fliessen lässt.

**Revendications**

1. Procédé de production d'un polymère soluble ou gonflable dans l'eau, qui comprend la photopolymérisation d'une couche, d'épaisseur 1 à 50 mm, de solution de monomère contenant un initiateur de polymérisation, recouverte d'un film non polymérisable transmettant la lumière et mis en contact étroit sur la couche de monomère, un gaz étant utilisé comme milieu réfrigérant pour la régulation de la température.

2. Procédé de production d'un polymère soluble ou gonflable dans l'eau selon la revendication 1, dans lequel la photopolymérisation est réalisée sous irradiation par une lumière ayant une longueur d'onde de 300 à 500 nm.

3. Procédé de production d'un polymère soluble ou gonflable dans l'eau selon la revendication 1, dans lequel l'initiateur de polymérisation est un initiateur de photopolymérisation.

4. Procédé de production d'un polymère soluble ou gonflable dans l'eau selon la revendication 1, dans lequel le gaz est choisi dans le groupe constitué par l'air, l'azote gazeux et le gaz carbonique.

5. Procédé de production d'un polymère soluble ou gonflable dans l'eau selon la revendication 1, dans lequel la concentration de la solution de monomère de la couche de solution de monomère est supérieure ou égale à 20%.

6. Procédé de production d'un polymère soluble ou gonflable dans l'eau selon la revendication 1, dans lequel on effectue la polymérisation, sur une courroie sans fin à déplacement horizontal, en chargeant la

9

solution de monomère, en une épaisseur prédéterminée, en recouvrant la partie supérieure de la solution de monomère avec un film non polymérisable transmettant la lumière et mis en contact étroit sur la couche de monomère, en polymérisant le monomère tout en déplaçant la courroie et en faisant circuler un gaz, avec un débit et une température prédéterminés, sur une des surfaces, our sur les deux surfaces, de la solution de monomère, à travers le film non polymérisable transmettant la lumière et/ou la courroie, selon un procédé de soufflage ou d'aspiration.